# EUROPEAN PATENT APPLICATION

(11) **EP 4 643 738 A1**
(43) Date of publication of application: **05.11.2025**
(21) Application number: 23909044.2
(22) Date of filing: 26.06.2023
(51) Int. Cl.: A47L 11/24, A47L 11/282, A47L 11/40

(54) **AUTOMATIC CLEANING APPARATUS**

(30) Priority: 30.12.2022 CN 202223604354 U
(71) Applicant: Beijing Roborock Technology Co., Ltd., Beijing 102206 (CN)
(72) Inventor: LI, Xing, Beijing 102206 (CN); ZHOU, Yongfei, Beijing 102206 (CN); CHENG, Pan, Beijing 102206 (CN); LIU, Ming, Beijing 102206 (CN); LIN, Xiang, Beijing 102206 (CN)
(74) Representative: Winter, Brandl - Partnerschaft mbB
(86) International application number: PCT/CN2023/102493
(87) International publication number: WO 2024/139099

(57) **Abstract**

An automatic cleaning apparatus. The automatic cleaning apparatus comprises a mobile platform (1000), and a cleaning module (5000) assembled on the mobile platform (1000). The cleaning module (5000) comprises: a first rolling brush (100), wherein the first rolling brush (100) is arranged along a direction perpendicular to an axis of the mobile platform (1000) and comprises a first long brush piece (121); and a second rolling brush (200), wherein the second rolling brush (200) is arranged in parallel to the first rolling brush (100) and comprises a second long brush piece (221). The first long brush piece (121) and the second long brush piece (221) are configured to interfere with each other, such that an air intake channel (50) between the first rolling brush (100) and the second rolling brush (200) is at least partially shielded.

## Description

### CROSS-REFERENCE TO RELATED APPLICATION

The present disclosure claims priority to Chinese Patent Application No. 202223604354.6 filed on December 30, 2022, which is incorporated herein by reference in its entirety as a part of the present disclosure.

### TECHNICAL FIELD

The present disclosure relates to the technical field of cleaning devices, and in particular to an automatic cleaning device.

### BACKGROUND

With the continuous development of science and technology, automatic cleaning devices, such as sweeping robots and sweeping and mopping integrated machines, have been widely used in homes. For a cleaning robot with a sweeping function, in order to implement the sweeping function, the automatic cleaning device rolls up garbage of different sizes on a cleaning surface by using roller brushes provided in pairs, and the garbage may be sucked into a garbage collection box through an air inlet channel.

However, the existing automatic cleaning device cannot effectively send the garbage into the garbage collection box all the time, and the dust pickup efficiency needs to be further improved.

### SUMMARY

Some embodiments of the present disclosure provide an automatic cleaning device. The automatic cleaning device includes:
a mobile platform configured to automatically move on an operating surface; and
a cleaning module assembled to the mobile platform and configured to clean the operating surface, where the cleaning module includes:
   a first roller brush arranged in a first direction perpendicular to an axis of the mobile platform, where the first roller brush includes a first long brush component; and
   a second roller brush arranged side by side with the first roller brush, where the second roller brush includes a second long brush component,
   where the first long brush component and the second long brush component are configured to interfere with each other, enabling an air inlet channel between the first roller brush and the second roller brush to be at least partially shielded, thereby increasing a dust suction effect of the cleaning module.

Some embodiments of the present disclosure provide an automatic cleaning device. The automatic cleaning device includes:
a mobile platform configured to automatically move on an operating surface; and
a cleaning module assembled to the mobile platform and configured to clean the operating surface, where the cleaning module includes:
   a first roller brush arranged in a first direction perpendicular to an axis of the mobile platform, where the first roller brush includes a first long brush component and a first short brush component; and
   a second roller brush arranged side by side with the first roller brush, where the second roller brush includes a second long brush component and a second short brush component,
   where the first long brush component and the second long brush component are configured to interfere with each other, enabling an air inlet channel between the first roller brush and the second roller brush to be at least partially shielded, and the first short brush component and the second short brush component do not interfere with each other.

### BRIEF DESCRIPTION OF THE DRAWINGS

The accompanying drawings, which are incorporated into and constitute a part of the specification, illustrate embodiments consistent with the present disclosure and are used in conjunction with the specification to explain the principles of the present disclosure. Apparently, the drawings in the following description are merely some embodiments of the present disclosure, and those of ordinary skill in the art may still derive other drawings from these drawings without creative efforts. In the drawings:
FIG. 1 is a schematic diagram of a three-dimensional structure of an automatic cleaning device according to some embodiments of the present disclosure;
FIG. 2 is a schematic bottom view of an automatic cleaning device according to some embodiments of the present disclosure;
FIG. 3 is a schematic structural diagram of a combination of two groups of roller brushes involved in some embodiments of the present disclosure;
FIG. 4 is a schematic structural diagram of a first roller brush in FIG. 3; and
FIG. 5 is a schematic cross-sectional view of the first roller brush in FIG. 4.

### DETAILED DESCRIPTION

For clearer descriptions of the objectives, technical solutions, and advantages of the present disclosure, the present disclosure is further described in detail hereinafter with reference to the accompanying drawings. Apparently, the described embodiments are merely some embodiments of the present disclosure, rather than all of the embodiments. Based on the embodiments in the present disclosure, all other embodiments obtained by those of ordinary skill in the art without creative efforts shall fall within the protection scope of the present disclosure.

It should be further noted that the terms "comprise", "comprising", "include", "including", or any other variation thereof, are intended to encompass a non-exclusive inclusion, such that a commodity or an apparatus including a list of elements includes not only those elements, but also other elements not explicitly listed or inherent to such commodity or apparatus. Without further limitation, an element defined by the phrase "comprising a/an..." or "including a/an..." does not exclude the presence of other identical elements in the commodity or apparatus including the element.

In the related art, an automatic cleaning device, such as a sweeping robot, rolls up garbage of different sizes on a cleaning surface by using roller brushes provided in pairs, and the garbage may be sucked into a garbage collection box through an air inlet channel. However, the existing automatic cleaning device cannot effectively send the garbage into the garbage collection box all the time. Therefore, how to effectively increase a dust suction effect of the automatic cleaning device has become an urgent technical problem to be solved.

The present disclosure provides an automatic cleaning device. The automatic cleaning device includes: a mobile platform and a cleaning module. The mobile platform is configured to automatically move on an operating surface. The cleaning module is assembled to the mobile platform and is configured to clean the operating surface. The cleaning module includes: a first roller brush arranged in a first direction perpendicular to an axis of the mobile platform, the first roller brush including a first long brush component; and a second roller brush arranged side by side with the first roller brush, the second roller brush including a second long brush component. The first long brush component and the second long brush component are configured to interfere with each other, such that an air inlet channel between the first roller brush and the second roller brush is at least partially shielded, so as to increase a dust suction effect of the cleaning module.

During the operation of the automatic cleaning device provided by the present disclosure, the first long brush component and the second long brush component may interfere with each other, such that the air inlet channel between the first roller brush and the second roller brush is at least partially shielded, thereby increasing the flow rate of an airflow flowing through the air inlet channel to a certain extent, and further increasing the dust suction effect of the cleaning module.

Optional embodiments of the present application will be described in detail hereinafter with reference to the accompanying drawings.

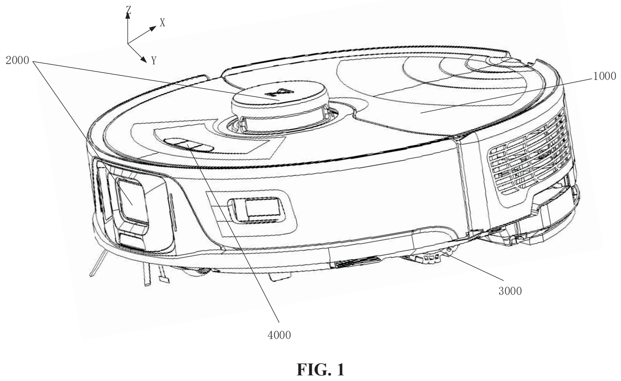

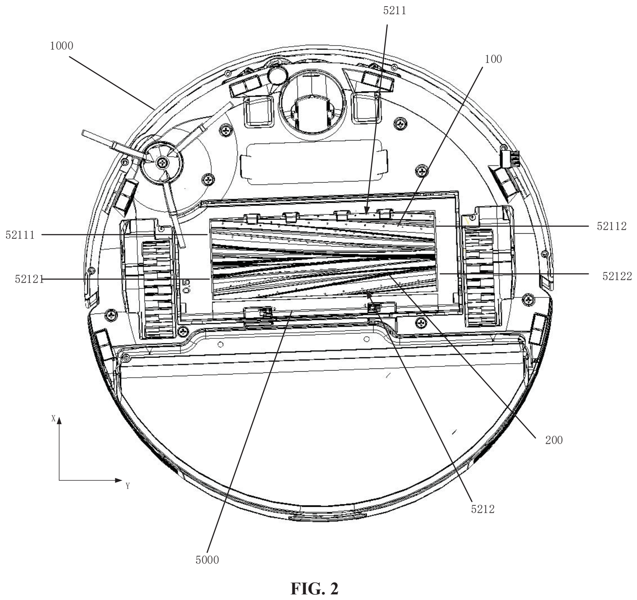

FIGs. 1 and 2 are schematic structural diagrams of an automatic cleaning device according to an exemplary embodiment. As shown in FIGs. 1 and 2, the automatic cleaning device may be a robot vacuum cleaner, a mopping/scrubbing robot, a window cleaning robot, or the like. The automatic cleaning device may include a mobile platform 1000, a sensing system 2000, a control system (not shown), a driving system 3000, a power system (not shown), a human-machine interaction system 4000, and a cleaning module 5000.

The mobile platform 1000 may be configured to automatically move in a target direction on an operating surface. The operating surface may be a surface to be cleaned by the automatic cleaning device. In some embodiments, the automatic cleaning device may be a mopping robot, the automatic cleaning device operates on the ground, and the ground serves as the operating surface. The automatic cleaning device may also be a window cleaning robot, the automatic cleaning device operates on an outer surface of a glass of a building, and the glass serves as the operating surface. The automatic cleaning device may further be a pipeline cleaning robot, the automatic cleaning device operates on an inner surface of a pipeline, and the inner surface of the pipeline serves as the operating surface. For the purpose of illustration only, the following description in the present application is illustrated by taking a mopping robot as an example.

In some embodiments, the mobile platform 1000 may be an autonomous mobile platform or a non-autonomous mobile platform. The autonomous mobile platform means that the mobile platform 1000 itself can automatically and adaptively make an operational decision based on an unexpected environmental input; and the non-autonomous mobile platform itself cannot adaptively make an operational decision based on an unexpected environmental input, but can execute a given procedure or operate according to a certain logic. Correspondingly, when the mobile platform 1000 is an autonomous mobile platform, the target direction may be autonomously determined by the automatic cleaning device; and when the mobile platform 1000 is a non-autonomous mobile platform, the target direction may be set systematically or manually.

The sensing system 2000 includes sensing apparatuses such as a position determining apparatus (not shown) located above the mobile platform 1000, a buffer (not shown) located in a forward part of the mobile platform 1000, a cliff sensor (not shown) and an ultrasonic sensor (not shown) located at the bottom of the mobile platform, an infrared sensor (not shown), a magnetometer (not shown), an accelerometer (not shown), a gyroscope (not shown), and an odometer (not shown), to provide various position information and motion status information of the machine to the control system.

For convenience of description, directions are defined as follows: The automatic cleaning device may be calibrated by defining the following three axes perpendicular to one another: a transverse axis Y, a front-rear axis X, and a vertical axis Z. A direction to which an arrow along the front-rear axis X points is marked as "rearward", and a direction opposite to the direction of the arrow along the front-rear axis X is marked as "forward". The transverse axis Y is substantially in a width direction of the automatic cleaning device. A direction of an arrow along the transverse axis Y is marked as "leftward", and a direction opposite to the direction of the arrow along the transverse axis Y is marked as "rightward". The vertical axis Z is a direction extending upward from the bottom surface of the automatic cleaning device. As shown in FIG. 1, a direction along the front-rear axis X is defined as a second direction, where the second direction is, for example, a forward direction or a rearward direction; and a direction perpendicular to the second direction in a horizontal plane is defined as a first direction, where the first direction is, for example, a leftward direction or a rightward direction.

The control system (not shown) is arranged on a main circuit board in the mobile platform 1000, and includes a computing processor, such as a central processing unit or an application processor, that communicates with a non-transitory memory (such as a hard disk, a flash memory, or a random access memory). The application processor is configured to receive environmental information sensed by a plurality of sensors and transmitted from the sensing system, draw a real-time map of an environment in which the automatic cleaning device is located by using a positioning algorithm, such as SLAM based on obstacle information fed back by the position determining apparatus, etc., autonomously determine a travel path based on the environmental information and the environmental map, and then control the driving system 3000 to perform operations such as traveling forward, traveling rearward, and/or steering according to the autonomously determined travel path. Further, the control system may also determine whether to activate the cleaning module 5000 to perform a cleaning operation based on the environmental information and the environmental map.

The driving system 3000 may execute a driving command based on specific distance and angle information, for example, x, y, and θ components, to steer the automatic cleaning device to run across the ground. The driving system 3000 includes a driving wheel assembly. The driving system 3000 may simultaneously control a left wheel and a right wheel. To more precisely control the movement of the machine, the driving system 3000 preferably includes a left driving wheel assembly and a right driving wheel assembly. The left and right driving wheel assemblies are symmetrically disposed along a transverse axis defined by the mobile platform 1000. To enable the automatic cleaning device to move more stably on the ground or to achieve stronger mobility, the automatic cleaning device may include one or more steering assemblies. Each steering assembly may be either a driven wheel or a driving wheel, and may adopt structural forms including but not limited to a universal wheel. The steering assembly may be located in front of the driving wheel assembly.

The power system (not shown) includes a rechargeable battery, for example, a nickel-hydrogen battery and a lithium battery. The rechargeable battery may be connected to a charging control circuit, a battery pack charging temperature detection circuit, and a battery undervoltage monitoring circuit. The charging control circuit, the battery pack charging temperature detection circuit, and the battery undervoltage monitoring circuit are then connected to a single-chip microcomputer control circuit. The main machine is charged through connection to a charging pile via charging electrodes disposed on the side or bottom of the machine body.

The human-machine interaction system 4000 includes a button on a host panel for a user to select a function, and may further include a display screen and/or an indicator light and/or a speaker, where the display screen, the indicator light, and the speaker show a current state of the machine or function options to the user, and may further include a mobile phone client program. For a path navigation type cleaning device, a mobile phone client may show a map of an environment in which the device is located and a location of the machine to the user, providing the user with richer and more user-friendly function options.

As shown in FIG. 2, the cleaning module 5000 includes a dust box, a fan, and a main brush module. The main brush module sweeps the garbage on the ground to the front of a dust suction port between the main brush module and the dust box, and then the garbage is sucked into the dust box by the gas with suction generated by the fan and passing through the dust box. The dust removal capacity of the sweeper may be characterized by a dust pickup efficiency (DPU) of the garbage. The DPU is affected by a wind force utilization rate of an air duct formed by the dust suction port, the dust box, the fan, the air outlet, and connecting components among the four, and is affected by a type and power of the fan, thereby posing a complex system design problem. Compared with a conventional plug-in vacuum cleaner, the improvement in the dust removal capacity is more significant for an automatic cleaning device with limited energy. The improvement in the dust removal capacity directly and effectively reduces the energy requirements. That is, a machine that can sweep 80 square meters of the ground on a single charge can be evolved to sweep 180 square meters or more on a single charge. In addition, a service life of the battery with a reduced quantity of charging times is greatly increased, such that a frequency of replacing the battery by the user is also reduced. More visually and importantly, the improvement in the dust removal capacity is the most obvious and important user experience, and the user will directly draw a conclusion on whether the sweeping/wiping is thorough.

FIG. 2 is a schematic structural diagram of the automatic cleaning device in FIG. 1 in a bottom view. As shown in FIG. 2, the automatic cleaning device includes a mobile platform 1000. The mobile platform 1000 is configured to move freely on an operating surface, a cleaning module 5000 is provided at the bottom of the mobile platform 1000, and the cleaning module 5000 is configured to clean the operating surface. The cleaning module 5000 includes a drive unit 5100, a roller brush framework 5200, and roller brushes 5300 assembled in the roller brush framework 5200. The drive unit 5100 provides a driving force for forward rotation or reverse rotation, and the driving force is applied to the roller brush 5300 through a multi-stage gear set. The roller brush 5300 rotates under the action of the driving force to clean the operating surface, or the roller brush 5300 rotates under the action of the driving force to collect dust.

As shown in FIG. 2, the roller brush framework 5200 is provided with a front cleaning brush mounting position 5211 and a rear cleaning brush mounting position 5212 for accommodating cleaning roller brushes. The front cleaning brush mounting position 5211 is provided with a first end portion 52111 and a second end portion 52112 opposite to the first end portion 52111. One end of the first roller brush 100 is engaged and fixed at the first end portion 52111, and the other end of the first roller brush is engaged and fixed at the second end portion 52112. In some embodiments, the front cleaning brush mounting position 5211 is a long-strip-shaped groove structure in the mobile platform, and the long-strip-shaped groove structure extends in the first direction. The rear cleaning brush mounting position 5212 is provided with a third end portion 52121 and a fourth end portion 52122 opposite to the third end portion 52121. In some embodiments, the rear cleaning brush mounting position 5212 has substantially the same structure as the front cleaning brush mounting position 5211. For example, the rear cleaning brush mounting position is also a long-strip-shaped groove structure in the mobile platform, and the long-strip-shaped groove structure extends in the first direction. The second roller brush may be mounted in the long-strip-shaped groove of the rear cleaning brush mounting position 5212 through an opening of the long-strip-shaped groove structure. The two long-strip-shaped groove structures are parallel to each other in the second direction. The shape and size of the long-strip-shaped groove structure are not limited, as long as at least a portion of the first roller brush and at least a portion of the second roller brush are accommodated. The first end portion of the front cleaning brush mounting position 5211 and the third end portion of the rear cleaning brush mounting position 5212 are located at one side of the front-rear axis X, and the second end portion of the front cleaning brush mounting position 5211 and the fourth end portion of the rear cleaning brush mounting position 5212 are located at the other side of the front-rear axis X.

It should be noted that, in the following embodiments of the present disclosure, an example in which the long-strip-shaped groove structure proximal to the steering wheel on the automatic cleaning device is the front cleaning brush mounting position 5211 and the long-strip-shaped groove structure away from the steering wheel is the rear cleaning brush mounting position 5212 is used for detailed description. Certainly, the reverse arrangement is also possible.

As shown in FIG. 2, in some embodiments, the automatic cleaning device includes two cleaning roller brushes 5300. One cleaning roller brush is disposed at the front cleaning brush mounting position 5211 and regarded as a "front roller brush", and the other cleaning roller brush is disposed at the rear cleaning brush mounting position 5212 and regarded as a "rear roller brush". The front roller brush may be mounted in the front cleaning brush mounting position 5211 through the opening of the long-strip-shaped groove structure, and the rear roller brush may be mounted in the rear cleaning brush mounting position 5212 through the opening of the long-strip-shaped groove structure.

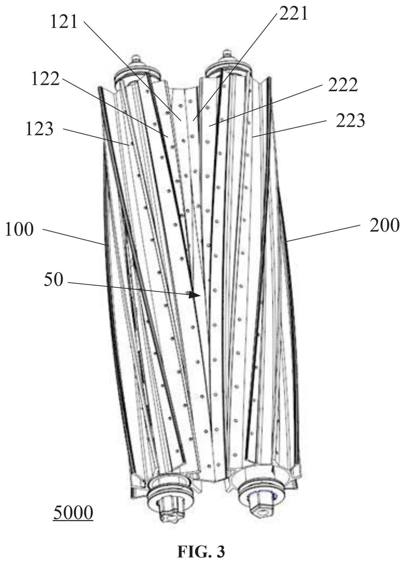

FIG. 3 shows structural and positional relationships between a first roller brush and a second roller brush according to some embodiments of the present disclosure. Referring to FIGs. 1 to 3, the cleaning module 5000 further includes a first roller brush 100 and a second roller brush 200. The first roller brush 100 serves as a front brush of the cleaning module 5000, and the second roller brush 200 serves as a rear brush of the cleaning module 5000. The mobile platform 10 is provided with a roller brush accommodating space for accommodating the first roller brush 100 and the second roller brush 200, such as a long-strip-shaped accommodating groove located at the bottom of the mobile platform 10. In some embodiments, the mobile platform 10 is further provided with a roller brush mounting position. One end of each of the first roller brush 100 and the second roller brush 200 may be engaged and fixed to the roller brush mounting position, such that the first roller brush 100 and the second roller brush 200 are detachably mounted on the mobile platform 10.

The first roller brush 100 is arranged in a first direction perpendicular to an axis of the mobile platform 10, for example, in a direction of a transverse axis Y, and the second roller brush 200 is also arranged in the first direction perpendicular to the axis of the mobile platform 10, for example, in the direction of the transverse axis Y. That is, the second roller brush 200 is arranged side by side with the first roller brush 100.

As shown in the figure, the first roller brush 100 is arranged side by side with the second roller brush 200, and brush components are provided on both the first roller brush 100 and the second roller brush 200. The first roller brush 100 includes a first long brush component 121 and a first short brush component 122, and the second roller brush 200 includes a second long brush component 221 and a second short brush component 222.

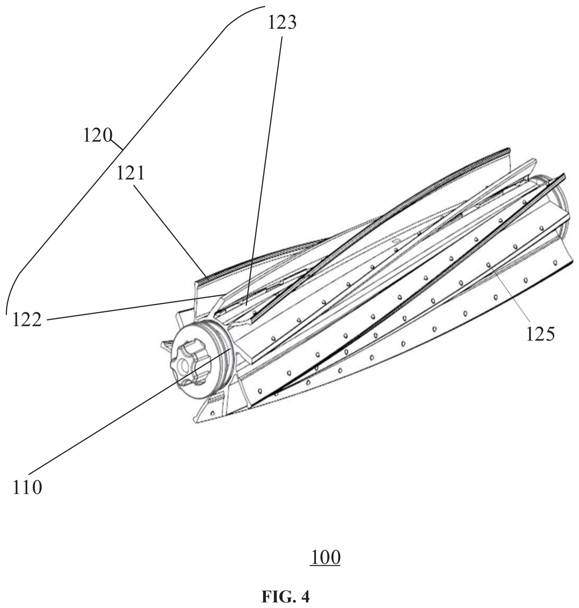

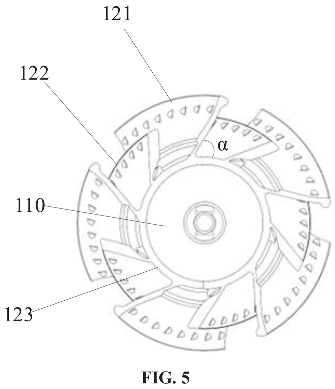

Referring to FIGs. 4 and 5, FIG. 4 is a schematic structural diagram of the first roller brush 100, and FIG. 5 is a schematic cross-sectional view of the first roller brush 100 in FIG. 4. It should be noted that, in FIG. 4, the structure of the roller brush is only illustrated by using the first roller brush 100 as an example. In some embodiments, the structure of the second roller brush 200 may be substantially the same as the structure of the first roller brush 100, and the second roller brush and the first roller brush are symmetrically arranged. Therefore, when the second roller brush 200 is illustrated, reference may be made to the structure of the first roller brush 100 shown in the figure.

As shown in the figure, in some embodiments, the first roller brush 100 includes a first shaft rod 110 and a first brush member 120. The first brush member 120 is arranged on the first shaft rod 110.

The first shaft rod 110 may be in a rod-shaped structure, such as a long-strip cylindrical structure. Two ends of the rod-shaped structure may be detachably mounted to the bottom of the mobile platform of the cleaning device directly or via a connecting member. In some embodiments, the first shaft rod 110, along with the first brush member 120 arranged on the first shaft rod 110, is detachably mounted in the long-strip-shaped roller brush accommodating groove at the bottom of the mobile platform.

An axis of the first shaft rod 110 may be regarded as a rotation shaft of the first roller brush 100. After the first roller brush 100 is mounted to the mobile platform, a driving system located on the mobile platform may drive the first shaft rod 110 to rotate, and the rotation direction may be clockwise or counterclockwise. When the first shaft rod 110 rotates, other assemblies arranged on the first shaft rod 110, such as the first brush member 120, may be driven to rotate together, so as to achieve the purpose of sweeping.

The first brush member 120 is arranged on the first shaft rod 110. Specifically, in some embodiments, the first brush member 120 is detachably arranged on the first shaft rod 110 to facilitate daily cleaning and maintenance of the first brush member 120.

The first brush member 120 includes a first cylindrical member 123 and a first long brush component 121. In some embodiments, the first brush member 120 may further include a first short brush component 122.

The first cylindrical member 123 is configured to be arranged on the first shaft rod 110 in a sleeving manner, such that the first cylindrical member 123 is coaxial with the first shaft rod 110. The first cylindrical member 123 may be in a long-strip cylindrical structure, and a length of the first cylindrical member 123 is substantially the same as a length of the first shaft rod 110. The first cylindrical member 123 is tightly arranged on the first shaft rod 110 in a sleeving manner. An inner diameter of the first cylindrical member 123 is substantially equal to or slightly less than an outer diameter of the first shaft rod 110, such that the first shaft rod 110 and the first cylindrical member 123 do not move relative to each other during rotation. The first cylindrical member 123 may be a flexible member or a rigid member.

The first short brush component 122 extends from an outer surface of the first cylindrical member 123 in a direction away from the first cylindrical member 123. The first long brush component 121 extends from the outer surface of the first cylindrical member 123 in the direction away from the first cylindrical member 123. In some embodiments, an extension length of the first long brush component 121 away from the first cylindrical member 123 is greater than an extension length of the first short brush component 122 away from the first cylindrical member 123. A thickness of a brush component body of the first long brush component 121 is less than a thickness of a brush component body of the first short brush component 122. That is, the first short brush component 122 is relatively short and thick, and the first long brush component 121 is relatively long and thin.

By differently configuring the lengths and thicknesses of the brush components, the first short brush component 122 can provide a strong sweeping force when dealing with large garbage (such as shells and blocky particles), and the first long brush component 121 exerts a small contact force on the cleaning surface, resulting in low daily sweeping noise. By differently configuring the lengths and thicknesses of the brush components, the first short brush component 122 may not contact with a flat and hard cleaning surface such as a tile or a wood floor when the cleaning surface is swept, and the first long brush component 121 may contact with the cleaning surface to tap and roll up dust, hair, and other garbage that needs to be swept and then suck the garbage into the dust box. When a cleaning surface of a substantial thickness such as a carpet is swept, both the first short brush component 122 and the first long brush component 121 may contact with the surface of the carpet, and in this case, the thick first short brush component 122 may play a more significant role in tapping and peeling off the dust and hair hidden in the carpet, thereby improving the sweeping effect.

It can be understood that, correspondingly, the second roller brush may include a second shaft rod and a second brush member. The second brush member is detachably mounted on the second shaft rod. The second brush member may include a second cylindrical member, a second long brush component, and a second short brush component.

It can be understood that more than one first long brush component 121 may be provided. A plurality of first long brush components 121 may be provided, and the plurality of first long brush components 121 may be uniformly distributed in a circumferential direction of the first cylindrical member 123. More than one first short brush component 122 may be provided. A plurality of first short brush components 122 may be provided, and the plurality of first short brush components 122 may be uniformly distributed in the circumferential direction of the first cylindrical member 123.

In some embodiments, the first short brush components 122 and the first long brush components 121 are alternately and uniformly arranged in the circumferential direction of the first cylindrical member 123. For example, the brush member 120 of the first roller brush 100 includes five first short brush components 122 and five first long brush components 121. The five first short brush components 122 and the five first long brush components 121 are alternately and uniformly arranged in the circumferential direction of the first cylindrical member 123.

It can be understood that, correspondingly, more than one second long brush component may be provided. The plurality of second long brush components may be uniformly distributed in a circumferential direction of the second cylindrical member. More than one second short brush component may be provided. A plurality of second short brush components may be provided, and the plurality of second short brush components may be uniformly distributed in the circumferential direction of the second cylindrical member. Also, the second short brush components and the second long brush components are alternately and uniformly arranged in the circumferential direction of the first cylindrical member.

With continued reference to FIG. 3, an air inlet channel 50 is further provided between the first roller brush 100 and the second roller brush 200. One side of the air inlet channel 50 faces the cleaning surface, and the other side of the air inlet channel 50 is in communication with an air duct inside the mobile platform 10. The first long brush component 121 and the second long brush component 221 may interfere with each other, such that the air inlet channel 50 between the first roller brush 100 and the second roller brush 200 is at least partially shielded.

Specifically, when the first roller brush 100 and the second roller brush 200 operate, the first roller brush 100 and the second roller brush 200 rotate at the same speed but in opposite directions. For example, the first roller brush 100 rotates in a first rotation direction, and the second roller brush 200 rotates in a second rotation direction. The first rotation direction is opposite to the second rotation direction. For example, the first rotation direction is a counterclockwise direction, and the second rotation direction is a clockwise direction. During rotation, the first long brush component 121 and the second long brush component 221 may interfere with each other, causing part of surfaces of the first long brush component 121 and the second long brush component 221 to contact with each other, such that the air inlet channel 50 between the first roller brush 100 and the second roller brush 200 is at least partially shielded. In some embodiments, the first long brush component 121 and the second long brush component 221 are always in an interference contact state, that is, the long brush components in a lower layer make contact before the long brush components in an upper layer are separated.

As the first roller brush 100 and the second roller brush 200 rotate towards each other, the first long brush component 121 and the second long brush component 221 will collect garbage in the middle, allowing the garbage to be sucked into the dust box in the mobile platform 10 through the air duct to achieve the purpose of cleaning. In addition, during rotation, the first roller brush 100 and the second roller brush 200 may interfere with each other, such that the air inlet channel 50 between the first roller brush 100 and the second roller brush 200 is at least partially shielded, thereby increasing the flow rate of an airflow flowing through the air inlet channel 50 to a certain extent, and further increasing the dust suction effect of the cleaning module.

In some embodiments, when the first roller brush 100 and the second roller brush 200 operate, the first roller brush 100 and the second roller brush 200 rotate at the same speed but in opposite directions. During rotation, the first short brush component 122 does not interfere with the second roller brush 200, that is, the first short brush component 122 does not come into surface contact with the second long brush component 221 and the second short brush component 222. Similarly, in some embodiments, the second short brush component 222 does not interfere with the first roller brush 100, that is, the second short brush component 222 does not come into surface contact with the first long brush component 121 and the first short brush component 122. Compared with the long brush component, the short brush component has a smaller length, a larger thickness, and a greater contact force. The interference between the short brush component and the roller brush cannot well shield the air inlet channel 50, and may cause the brush component to get stuck during rotation. Even jamming may occur. Therefore, the interference between the short brush component and the roller brush is avoided as much as possible.

In some embodiments, a plurality of first long brush components 121 and a plurality of second long brush components 221 are provided. The plurality of first long brush components 121 are in one-to-one correspondence to the plurality of second long brush components 221. Any one of the plurality of first long brush components 121 is configured to interfere with a corresponding second long brush component 221, such that multiple interferences can be implemented in one rotation cycle.

In some embodiments, distribution positions of the first long brush components 121 in the circumferential direction of the first cylindrical member 123 are in one-to-one correspondence to distribution positions of the plurality of second long brush components 221 in the circumferential direction of the second cylindrical member 223. For example, the plurality of first long brush components 121 are uniformly distributed in the circumferential direction of the first cylindrical member 123, and the plurality of second long brush components 221 are uniformly distributed in the circumferential direction of the second cylindrical member 223.

In some embodiments, when the automatic cleaning device performs a cleaning operation, at least one pair of corresponding first long brush components 121 and second long brush components 221 interfere with each other at any time, such that the air inlet channel 50 may always be partially shielded, thereby continuously enhancing the dust suction effect of the cleaning device.

In some embodiments, the first long brush component 121 extends from one end of the first cylindrical member 123 to the other end of the first cylindrical member 123 on the outer surface of the first cylindrical member 123. Specifically, the first long brush component 121 may spirally extend from one end of the first cylindrical member 123 to the other end of the first cylindrical member 123 in the second rotation direction on the outer surface of the first cylindrical member 123. By spirally arranging the first long brush component 121 on the outer surface of the first cylindrical member 123, the first cylindrical member 123 may have more contact sites with the cleaning surface, which can achieve more sufficient contact between the first cylindrical member 123 and the cleaning surface and facilitate taking away garbage on the cleaning surface, thereby improving the sweeping capacity.

It can be understood that, correspondingly, the second long brush component 221 may spirally extend from one end of the second cylindrical member 223 to the other end of the second cylindrical member 223 on the outer surface of the second cylindrical member 223 in the first rotation direction.

In some embodiments, the first long brush component 121 tilts in the second rotation direction in the circumferential direction of the first cylindrical member 123. FIG. 5 shows an included angle α between the first long brush component 121 and a tangent direction of the first cylindrical member 123, where α is less than 90°. For example, in some embodiments, the value of α ranges from 45° to 85°. By configuring the first long brush component 121 to tilt in the first rotation direction in the circumferential direction of the first cylindrical member 123, a certain included angle may exist between the first long brush component 121 and the cleaning surface, such that garbage on the cleaning surface is more easily taken away during the sweeping process, thereby improving the sweeping capacity.

It can be understood that, correspondingly, the second long brush component 221 may be configured to tilt in the first rotation direction in the circumferential direction of the second cylindrical member 223.

In some embodiments, the first long brush component 121 spirally extends from one end of the first cylindrical member 123 to the middle portion of the first cylindrical member 123 on the outer surface of the first cylindrical member 123 in the second rotation direction and then spirally extends to the other end of the first cylindrical member 123 in the first rotation direction.

It can be understood that, correspondingly, the second long brush component 221 spirally extends from one end of the second cylindrical member 223 to the middle portion of the second cylindrical member 223 on the outer surface of the second cylindrical member 223 in the first rotation direction and then spirally extends to the other end of the second cylindrical member 223 in the second rotation direction.

In some embodiments, at least one of the first roller brush 100 and the second roller brush 200 is a hard-core roller brush. For example, one of the roller brushes is a hard-core roller brush, and the other is a soft-core roller brush. The hard-core roller brush means that the filler in the inner core of the roller brush is hard and inelastic, and the soft-core roller brush means that the filler in the inner core of the roller brush is elastic. The hard-core roller brush is not prone to deformation during long-term use, which is conducive to accurate alignment of the roller brush during interference. Therefore, in this embodiment, at least one roller brush is a hard-core roller brush, such that the corresponding relationship between the positions of the first long brush component and the second long brush component corresponding to each other can be maintained for a long time, and the corresponding relationship between the positions will not be affected due to deformation of the inner core of the roller brush, thereby improving the stability of the automatic cleaning device.

In some embodiments, a protrusion 125 is provided on a surface of at least one of the first long brush component 121 and the first short brush component 122. A plurality of protrusions 125 may be provided. The plurality of protrusions 125 are arranged in an extension direction of the first long brush component 121 and/or the first short brush component 122, and the protrusions 125 may be positioned away from the first cylindrical member 123 and proximal to the cleaning surface. By providing the protrusions 125, the contact area and contact force between the brush component and the cleaning surface and garbage can be increased, the capacity of the brush component to carry garbage can be improved, and the sweeping effect can be enhanced.

During the operation of the automatic cleaning device provided by the present disclosure, the first long brush component and the second long brush component may interfere with each other, such that the air inlet channel between the first roller brush and the second roller brush is at least partially shielded, thereby increasing the flow rate of an airflow flowing through the air inlet channel to a certain extent, and further increasing the dust suction effect of the cleaning module.

In some embodiments, at least one of the first roller brush 100 and the second roller brush 200 may only be provided with a long brush component without a short brush component. For example, each of the first roller brush 100 and the second roller brush 200 is only provided with a long brush component without a short brush component.

Some embodiments of the present disclosure provide an automatic cleaning device. The automatic cleaning device includes:
a mobile platform configured to automatically move on an operating surface; and
a cleaning module assembled to the mobile platform and configured to clean the operating surface, the cleaning module including:
   a first roller brush arranged in a first direction perpendicular to an axis of the mobile platform, the first roller brush including a first long brush component; and
   a second roller brush arranged side by side with the first roller brush, the second roller brush including a second long brush component,
   where the first long brush component and the second long brush component are configured to interfere with each other, such that an air inlet channel between the first roller brush and the second roller brush is at least partially shielded, so as to increase a dust suction effect of the cleaning module.

**In** some optional embodiments, the first roller brush includes a first short brush component, and the first short brush component does not interfere with the second roller brush.

**In** some optional embodiments, the second roller brush includes a second short brush component, and the second short brush component does not interfere with the first roller brush.

In some optional embodiments, the first roller brush includes: a first shaft rod; and a first brush member detachably mounted on the first shaft rod. The first brush member includes: a first cylindrical member configured to be arranged on the first shaft rod in a sleeving manner, such that the first cylindrical member is coaxial with the first shaft rod; the first long brush component extending from an outer surface of the first cylindrical member in a direction away from the first cylindrical member; and the first short brush component extending from the outer surface of the first cylindrical member in the direction away from the first cylindrical member. The second roller brush includes: a second shaft rod; and a second brush member detachably mounted on the second shaft rod. The second brush member includes: a second cylindrical member configured to be arranged on the second shaft rod in a sleeving manner, such that the second cylindrical member is coaxial with the second shaft rod; the second long brush component extending from an outer surface of the second cylindrical member in a direction away from the second cylindrical member; and the second short brush component extending from the outer surface of the second cylindrical member in the direction away from the second cylindrical member.

In some optional embodiments, an extension length of the first long brush component away from the first cylindrical member is greater than an extension length of the first short brush component away from the first cylindrical member, and a thickness of a brush component body of the first long brush component is less than a thickness of a brush component body of the first short brush component; and/or an extension length of the second long brush component away from the second cylindrical member is greater than an extension length of the second short brush component away from the second cylindrical member, and a thickness of a brush component body of the second long brush component is less than a thickness of a brush component body of the second short brush component.

In some optional embodiments, the first long brush component and the first short brush component are alternately and uniformly arranged in a circumferential direction of the first cylindrical member; and/or the second long brush component and the second short brush component are alternately and uniformly arranged in a circumferential direction of the second cylindrical member.

In some optional embodiments, a plurality of first long brush components and a plurality of second long brush components are provided, the plurality of first long brush components are in one-to-one correspondence to the plurality of second long brush components, and any one of the plurality of first long brush components is configured to interfere with a corresponding second long brush component.

In some optional embodiments, when the automatic cleaning device performs a cleaning operation, at least one pair of corresponding first long brush components and second long brush components interfere with each other at any time.

In some optional embodiments, the plurality of first long brush components are uniformly distributed in the circumferential direction of the first cylindrical member; and/or the plurality of second long brush components are uniformly distributed in the circumferential direction of the second cylindrical member.

In some optional embodiments, when the automatic cleaning device performs the cleaning operation, the first roller brush rotates in a first rotation direction, the second roller brush rotates in a second rotation direction, and the first rotation direction is opposite to the second rotation direction.

In some optional embodiments, the first long brush component spirally extends from one end of the first cylindrical member to the other end of the first cylindrical member on the outer surface of the first cylindrical member in the second rotation direction; and the second long brush component spirally extends from one end of the second cylindrical member to the other end of the second cylindrical member on the outer surface of the second cylindrical member in the first rotation direction.

In some optional embodiments, the first long brush component tilts in the second rotation direction in the circumferential direction of the first cylindrical member; and/or the second long brush component tilts in the first rotation direction in the circumferential direction of the second cylindrical member.

In some optional embodiments, the first long brush component spirally extends from one end of the first cylindrical member to the middle portion of the first cylindrical member on the outer surface of the first cylindrical member in the second rotation direction and then spirally extends to the other end of the first cylindrical member in the first rotation direction; and the second long brush component spirally extends from one end of the second cylindrical member to the middle portion of the second cylindrical member on the outer surface of the second cylindrical member in the first rotation direction and then spirally extends to the other end of the second cylindrical member in the second rotation direction.

In some optional embodiments, a protrusion is provided at an end portion of at least one of the first long brush component and the first short brush component away from the first cylindrical member; and a protrusion is provided at an end portion of at least one of the second long brush component and the second short brush component away from the second cylindrical member.

In some optional embodiments, one of the first roller brush and the second roller brush is a hard-core roller brush, and the other is a soft-core roller brush.

In some optional embodiments, at least one of the first roller brush and the second roller brush is a hard-core roller brush.

Some embodiments of the present disclosure provide an automatic cleaning device. The automatic cleaning device includes:
a mobile platform configured to automatically move on an operating surface; and
a cleaning module assembled to the mobile platform and configured to clean the operating surface, the cleaning module including:
   a first roller brush arranged in a first direction perpendicular to an axis of the mobile platform, the first roller brush including a first long brush component and a first short brush component; and
   a second roller brush arranged side by side with the first roller brush, the second roller brush including a second long brush component and a second short brush component,
   where the first long brush component and the second long brush component are configured to interfere with each other, such that an air inlet channel between the first roller brush and the second roller brush is at least partially shielded, and the first short brush component and the second short brush component do not interfere with each other.

In some embodiments, the first long brush component and the second long brush component interfere with each other to hinder an airflow, so as to increase local pressure.

It should be noted that the embodiments in the specification are described in a progressive manner, and each embodiment focuses on differences from other embodiments, and reference should be made to each other for the same or similar parts. Since the system or apparatus disclosed in the embodiment corresponds to the method disclosed in the embodiment, the description is relatively simple, and reference may be made to the description of the method part.

The above embodiments are only used to illustrate the technical solutions of the present disclosure, but not to limit them; although the present disclosure has been described in detail with reference to the foregoing embodiments, those of ordinary skill in the art should understand that they can still modify the technical solutions recorded in the foregoing embodiments, or make equivalent substitutions for some of the technical features; and these modifications or substitutions do not make the essence of the corresponding technical solutions deviate from the spirit and scope of the technical solutions in the embodiments of the present disclosure.

## Claims

1. An automatic cleaning device, comprising:
a mobile platform configured to automatically move on an operating surface; and
a cleaning module assembled to the mobile platform and configured to clean the operating surface, wherein the cleaning module comprises:
a first roller brush arranged in a direction perpendicular to an axis of the mobile platform,
wherein the first roller brush comprises a first long brush component; and
a second roller brush arranged side by side with the first roller brush, wherein the second
roller brush comprises a second long brush component,
wherein the first long brush component and the second long brush component are configured to interfere with each other, enabling an air inlet channel between the first roller brush and the second roller brush to be at least partially shielded.

2. The automatic cleaning device according to claim 1, wherein
the first roller brush comprises a first short brush component, and the first short brush component does not interfere with the second roller brush.

3. The automatic cleaning device according to claim 2, wherein
the second roller brush comprises a second short brush component, and the second short brush component does not interfere with the first roller brush.

4. The automatic cleaning device according to claim 3, wherein
the first roller brush comprises:
a first shaft rod; and
a first brush member detachably mounted on the first shaft rod, wherein the first brush member comprises:
a first cylindrical member configured to be arranged on the first shaft rod, enabling the first cylindrical member to be coaxial with the first shaft rod;
the first long brush component extending from an outer surface of the first cylindrical member in a direction away from the first cylindrical member; and
the first short brush component extending from the outer surface of the first cylindrical member in the direction away from the first cylindrical member, and
the second roller brush comprises:
a second shaft rod; and
a second brush member detachably mounted on the second shaft rod, wherein the second brush member comprises:
a second cylindrical member configured to be arranged on the second shaft rod, enabling the second cylindrical member to be coaxial with the second shaft rod;
the second long brush component extending from an outer surface of the second cylindrical member in a direction away from the second cylindrical member; and
the second short brush component extending from the outer surface of the second cylindrical member in the direction away from the second cylindrical member.

5. The automatic cleaning device according to claim 4, wherein
an extension length of the first long brush component away from the first cylindrical member is greater than an extension length of the first short brush component away from the first cylindrical member, and a thickness of a brush component body of the first long brush component is less than a thickness of a brush component body of the first short brush component; and/or
an extension length of the second long brush component away from the second cylindrical member is greater than an extension length of the second short brush component away from the second cylindrical member, and a thickness of a brush component body of the second long brush component is less than a thickness of a brush component body of the second short brush component.

6. The automatic cleaning device according to claim 4, wherein
the first long brush component and the first short brush component are alternately and uniformly arranged in a circumferential direction of the first cylindrical member; and/or
the second long brush component and the second short brush component are alternately and uniformly arranged in a circumferential direction of the second cylindrical member.

7. The automatic cleaning device according to any one of claims 1 to 6, wherein a plurality of first long brush components and a plurality of second long brush components are provided, the plurality of first long brush components are in one-to-one correspondence with the plurality of second long brush components, and any one of the plurality of first long brush components is configured to interfere with a corresponding second long brush component.

8. The automatic cleaning device according to claim 7, wherein when the automatic cleaning device performs a cleaning operation, at least one pair of corresponding first long brush components and second long brush components interfere with each other at any time.

9. The automatic cleaning device according to claim 7, wherein
the plurality of first long brush components are uniformly distributed in a circumferential direction of the first cylindrical member; and/or the plurality of second long brush components are uniformly distributed in a circumferential direction of the second cylindrical member.

10. The automatic cleaning device according to any one of claims 1 to 9, wherein when the automatic cleaning device performs a cleaning operation, the first roller brush rotates in a first rotation direction, the second roller brush rotates in a second rotation direction, and the first rotation direction is opposite to the second rotation direction.

11. The automatic cleaning device according to any one of claims 4 to 6, wherein
the first long brush component spirally extends in a second rotation direction, on the outer surface of the first cylindrical member, from one end of the first cylindrical member to another end of the first cylindrical member; and/or
the second long brush component spirally extends in a first rotation direction, on the outer surface of the second cylindrical member, from one end of the second cylindrical member to another end of the second cylindrical member.

12. The automatic cleaning device according to claim 10, wherein
the first long brush component tilts in the second rotation direction in a circumferential direction of the first cylindrical member; and/or the second long brush component tilts in the first rotation direction in a circumferential direction of the second cylindrical member.

13. The automatic cleaning device according to any one of claims 4 to 6, wherein
the first long brush component spirally extends in a second rotation direction, on the outer surface of the first cylindrical member, from one end of the first cylindrical member to a middle portion of the first cylindrical member, and then spirally extends in a first rotation direction to another end of the first cylindrical member; and/or
the second long brush component spirally extends in the first rotation direction, on the outer surface of the second cylindrical member, from one end of the second cylindrical member to a middle portion of the second cylindrical member, and then spirally extends in the second rotation direction to another end of the second cylindrical member.

14. The automatic cleaning device according to any one of claims 4 to 6, wherein
a protrusion is provided at an end portion of at least one of the first long brush component and the first short brush component away from the first cylindrical member; and/or
a protrusion is provided at an end portion of at least one of the second long brush component and the second short brush component away from the second cylindrical member.

15. The automatic cleaning device according to any one of claims 1 to 6, wherein
one of the first roller brush and the second roller brush is a hard-core roller brush, and another one of the first roller brush and the second roller brush is a soft-core roller brush.

16. The automatic cleaning device according to any one of claims 1 to 6, wherein
at least one of the first roller brush and the second roller brush is a hard-core roller brush.

17. An automatic cleaning device, comprising:
a mobile platform configured to automatically move on an operating surface; and
a cleaning module assembled to the mobile platform and configured to clean the operating surface, wherein the cleaning module comprises:
a first roller brush arranged in a direction perpendicular to an axis of the mobile platform, wherein the first roller brush comprises a first long brush component and a first short brush component; and
a second roller brush arranged side by side with the first roller brush, wherein the second roller brush comprises a second long brush component and a second short brush component,
wherein the first long brush component and the second long brush component are configured to interfere with each other, enabling an air inlet channel between the first roller brush and the second roller brush to be at least partially shielded, and the first short brush component and the second short brush component do not interfere with each other.

18. The automatic cleaning device according to claim 17, wherein
the first long brush component and the second long brush component interfere with each other to hinder an airflow, thereby increasing a local pressure.
